Europäisches Patentamt

European Patent Office

Office européen des brevets

(11) Publication number: **0 253 463**
**A1**

## EUROPEAN PATENT APPLICATION

(21) Application number: **87302321.2**

(22) Date of filing: **18.03.87**

(51) Int. Cl.⁴: **B60T 7/20**

(30) Priority: **18.03.86 GB 8606673**

(43) Date of publication of application:
**20.01.88 Bulletin 88/03**

(84) Designated Contracting States:
**AT DE ES FR GB IT**

(71) Applicant: **Graves, John Michael**
**Park End Road**
**Workington Cumbria CA14 4DE(GB)**

(72) Inventor: **Graves, John Michael**
**Park End Road**
**Workington Cumbria CA14 4DE(GB)**

(74) Representative: **Stanley, David William et al**
**APPLEYARD LEES & CO. 15 Clare Road**
**Halifax**
**West Yorkshire HX1 2HY(GB)**

(54) **A collapsing mechanism for a reversing drum brake.**

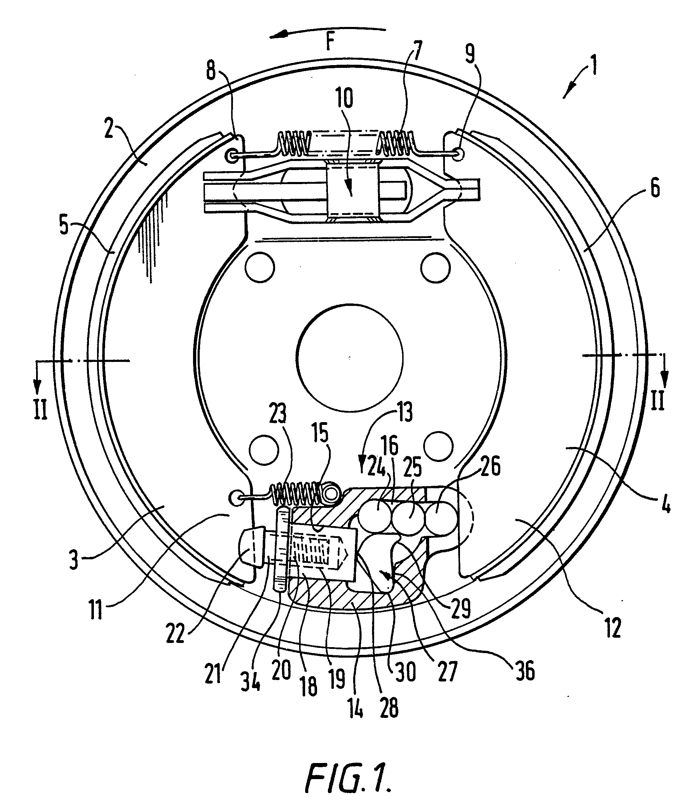

(57) A reversing drum brake comprises a pair of brake shoes 3, 4, the upper ends of which are connected by an expander 10. The lower opposing ends of the brake shoes 3, 4 are connected by a collapsing mechanism 13 within which there is disposed a slidable cylinder 18, a cam 27, and three steel rollers 24, 25, 26. During normal forward motion, the three rollers 24, 25, 26 are maintained in the position illustrated in Figure 1. During reversing, the three rollers 24, 25, 26 collapse and the cam 27 pivots anti-clockwise, to allow the overall collapsing mechanism 13 to collapse, and the brake shoes 3, 4 to move towards one another, thus overcoming braking effect.

FIG.1.

## A COLLAPSING MECHANISM FOR A REVERSING DRUM BRAKE

This invention relates to collapsing mechanisms for reversing drum brakes.

It is known to use reversing drum brakes on trailers. Trailers typically employ overrun brakes, which are arranged to operate automatically when the towing vehicle decelerates. Such brakes would tend to operate automatically also when the trailer is reversed (which is of course undesirable), were it not for the position of selector means for rendering the overrun brake altogether ineffective, or the provision of reversing drum brakes, which allow normal overrun brake operation but inhibit such braking action upon reversing.

A reversing drum brake typically comprises a brake drum and a pair of arcuate brake shoes which have opposing first and second ends and are adapted to engage opposite sides of the brake drum. An expanding means engages said first ends of the brake shoes and is operative to expand and contract whereby, when expanded, it urges said shoes outwardly to engage the brake drum, and effect braking. The brake shoes are provided with a collapsing mechanism such that, when the expanding means is expanded to effect braking then, upon reverse rotation of the brake drum, the collapsing mechanism so operates that the brake shoes collapse inwardly towards one another, whereby to prevent unwanted braking.

Such a reversing drum brake is hereinafter referred to as "a reversing drum brake of the type specified".

Several collapsing mechanisms have been proposed for reversing drum brakes of the type specified. Generally, they rely on the frictional engagement between brake shoe and drum, when rotating in reverse, to urge at least one of the shoes away from its normal braking position, to the extent that the expanding means cannot maintain the shoes in effective braking contact with the drum, in overrun braking operation. However, we have found that such collapsing mechanisms can offer significant resistance, to the extent that appreciable braking effort is still applied, in reversing manoeuvres. For example, where a trailer is reversed on gravel, there may be insufficient friction between the wheels of the towing vehicle and the ground to overcome residual braking effort in the reversing drum brakes of the trailer.

Preferred embodiments of the present invention aim to provide collapsing mechanisms for reversing drum brakes of the type specified, being relatively simple and economical to manufacture, and relatively efficient in operation.

According to a first aspect of the present invention, there is provided a collapsing mechanism for a reversing drum brake of the type specified, the mechanism comprising first and second members which are adapted to be disposed between opposing ends of a pair of brake shoes, said members being so connected that, when a resultant force is applied to the members in one direction, oppositely facing portions of the members are disposed at a first distance apart, such that they may hold respective ends of a pair of brake shoes at a corresponding distance apart, and when a resultant force is applied to the members in an opposite direction, the members collapse towards one another such that said oppositely facing portions are disposed at a second distance apart, less than said first distance, such that they may hold said respective ends of said pair of shoes at a corresponding lesser distance apart.

Preferably, the connection means between said members includes friction reducing means for reducing friction between said members when undergoing relative movement. Such friction reducing means preferably comprises roller means for providing rolling contact between moving surfaces.

In such an arrangement, the collapsing mechanism may comprise a housing in which said members are mounted and a guideway provided in the housing, the roller means being mounted for rolling movement in the guideway between first and second positions such that, in use, the roller means occupies either said first or second position in the guideway, in dependence upon the direction of the resultant force transmitted between said members, and the roller means permits said members to move closer towards one another when the roller means is in said first position than when the roller means is in said second postion.

Preferably, the collapsing mechanism includes a first member which is slidably mounted in said housing and mechanically linked to at least one roller of said roller means such that a first sliding movement of said first member in the housing causes a second rolling movement of said one roller in said guideway. Preferably, the linear travel of said one roller in said second rolling movement is greater than the sliding travel of said first member in said first sliding movement.

Said second member may be slidably mounted in said housing and mechanically linked to said one roller such that said second rolling movement of the roller causes a further sliding movement of the second member. Preferably, the further sliding movement of said second member is greater than the linear travel of said one roller in the said second movement.

Said first and second members may be slidably mounted in respective passageways at opposite ends of the housing, and have inner ends which face one another and in use are urged towards one another, with said one roller therebetween. Said one roller may be constrained to move in said guideway in a direction which extends transversely of the axes of the said passageways. Said inner end of said second member may have a face which contacts said one roller and extends transversely of the axis of the passageway of the second member.

The roller means may comprise one roller which serves as one of the said members.

The collapsing mechanism preferably includes a cam member which is mounted for pivotal movement in said housing and has a first cam surface which is adapted to receive or transmit a force from or to said one end of a respective brake shoe, and a second cam surface which is adapted to receive or transmit a force from or to at least one roller of the roller means. Said second cam surface is preferably at a greater distance than the first cam surface, from the pivot point of the cam.

The first cam surface preferably co-operates with the aforementioned first member.

The roller means may comprise at least one roller which is substantially cylindrical, and/or at least one roller which is substantially spherical. The roller means may comprise a plurality of rollers all of which may be substantially identical with one another.

The roller means may comprise three rollers which, in said first position of the roller means, are in a line which is straight or nearly straight.

Alternatively, the roller means may comprise only one roller.

Preferably, the collapsing mechanism includes adjuster means for adjusting the setting of respective brake shoes. The aforementioned first member may serve as at least part of the adjuster means.

The collapsing mechanism preferably includes biasing means for biasing said roller means into its first position. Such biasing means may comprise a spring which is adapted to act between said housing and one of said brake shoes.

The invention also extends to a reversing drum brake when provided with a collapsing mechanism in accordance with the first aspect of the invention.

For a better understanding of the invention and to show how the same may be carried into effect, reference will now be made, by way of example, to the accompanying diagrammatic drawings, in which:

Figure I is a side elevation of part of a reversing drum brake embodying the invention;

Figure 2 is a sectional view taken on the line II-II of Figure I;

Figure 3 is a view similar to Figure I, but showing the brake in a reversing mode;

Figure 4 is a side elevation of part of an alternative reversing drum brake incorporating another embodiment of the invention, and showing a collapsing mechanism in longitudinal section;

Figure 5 is a view similar to Figure 4, but showing the brake in a reversing mode; and

Figure 6 is a sectional view of the collapsing mechanism, taken on the line VI-VI of Figure 5.

In the figures, like reference numerals denote like or corresponding parts.

In Figures I and 2, the reversing drum brake I has a back plate 2 upon which there is mounted a pair of brake shoes 3 and 4, which carry respective brake linings 5 and 6. In a conventional manner, the brake shoes 3 and 4 are of arcuate form, being adapted to engage opposite sides of a brake drum (not shown), with which the illustrated assembly co-operates.

A tension spring 7 extends between opposed first ends 8 and 9 of the brake shoes 3, 4. An expander IO is adapted to be actuated by a brake linkage (not shown), and engages the opposing first ends 8, 9 of the brake shoes 3, 4.

The brake shoes 3, 4 have opposing second ends II, I2, between which there is disposed a collapsing mechanism I3.

The collapsing mechanism I3 comprises a housing I4 which is formed with a cylindrical bore I5 and a guideway I6, and is closed by a plate I7. The housing I4 is secured to the back plate 2.

Disposed in the cylindrical bore I5 is a correspondingly shaped cylinder I8, having an internal tapped bore I9 which receives the screw-threaded shank 20 of a bolt 2I. The head 22 of the bolt 2I is slotted, and engages the centre flange of the brake shoe 3, at its second end II. A slotted adjuster nut 34 is secured to the cylinder I8, and screw-threadedly engages the shank 20 of the bolt 2I.

A tension spring 23 is secured between the second end II of the brake shoe 3 and the housing I4.

Disposed within the guideway I6 are three identical steel rollers 24, 25 and 26, each occupying respective first positions. Also disposed within the guideway I6 is a cam 27, having a first cam surface 28, a second cam surface 29, and a pivot point 30.

All of the steel rollers 24, 25 and 26 are cylindrical, of circular cross-section. For example, they may comprise precision roller bearings. As shown in Figures I and 2, the right hand roller 26 bears directly against the centre flange 3I of the brake shoe 4, which flange engages between side wall portions 32 and 33 of the housing I4.

Operation of the drum brake, as illustrated in Figures I and 2, will now be briefly described.

Firstly, it is to be assumed that the illustrated brake assembly co-operates with an associated brake drum which rotates anti-clockwise, as indicated by the arrow F in Figure I, this corresponding to a normal forward direction of travel of the vehicle to which the brake is fitted. It is assumed that the brake is fitted to a trailer. Also, it is assumed that the various parts of the collapsing mechanism I3 retain the positions as illustrated in Figures I and 2.

When the trailer is undergoing normal forward motion, the tension springs 7, 23 cause the brake shoes 3, 4 to be drawn towards one another, and the brake linings 5, 6 are just clear of the adjacent rotating surface of the brake drum, whereby no braking is effected.

When the towing vehicle decelerates, the brake linkage is actuated automatically, via an overrun brake device (well known in itself, and not shown here), to activate the expander I0. The expander I0 causes the first ends 8, 9 of the brake shoes 3, 4 to be urged away from one another, such that the brake linings 5, 6 are brought into contact with the adjacent rotating surfaces of the brake drum, and braking is effected.

It will be appreciated that, during this braking action, the brake shoe 3 tends to pivot slightly about the head 22 of the bolt 2I, whilst the brake shoe 4 tends to pivot about the roller 26. The collapsing mechanism I3 is fixed, as the housing I4 is secured to the back plate 2. Thus, apart from the fact that the aforementioned pivot points for the brake shoes 3, 4 are fixed, the brake shoe assembly may float somewhat, in a conventional manner.

It will be appreciated that the bolt head 22 and the roller 26 react the forces transmitted by the second ends II, I2 of the brake shoes 3, 4. However, because the brake drum is rotating in an anti-clockwise direction (as seen in Figure I), the resultant force which is transmitted to the collapsing mechanism I3, as a result of the frictional engagement between the brake drum and the brake linings 5, 6, is from left to right (as seen in Figure I).

Thus, the resultant force experienced by the bolt head 22 is transmitted via the adjuster nut 34 to the housing I4, and also to the first cam surface 28 of the cam 27. The opposing, but lesser force transmitted from the brake shoe 4 is transmitted via the rollers 26, 25, 24 to the housing I4, and also via the two rollers 26, 25 to the second cam surface 29 of the cam 27.

As the resultant force on the cam 27 is from left to right (as seen), then the cam 27 remains in the position illustrated in Figure I. Thus, to all intents and purposes, the brake operates in a conventional manner, whilst the brake drum rotates in what is a forward direction.

In order to adjust the setting of the brake shoes 3, 4, the adjuster nut 34 is rotated, thereby to adjust the axial position of the bolt 22, with respect to the nut 34 and cylinder I8. A hole 35 is provided in the back plate, to afford access of a tool to the adjuster nut 34.

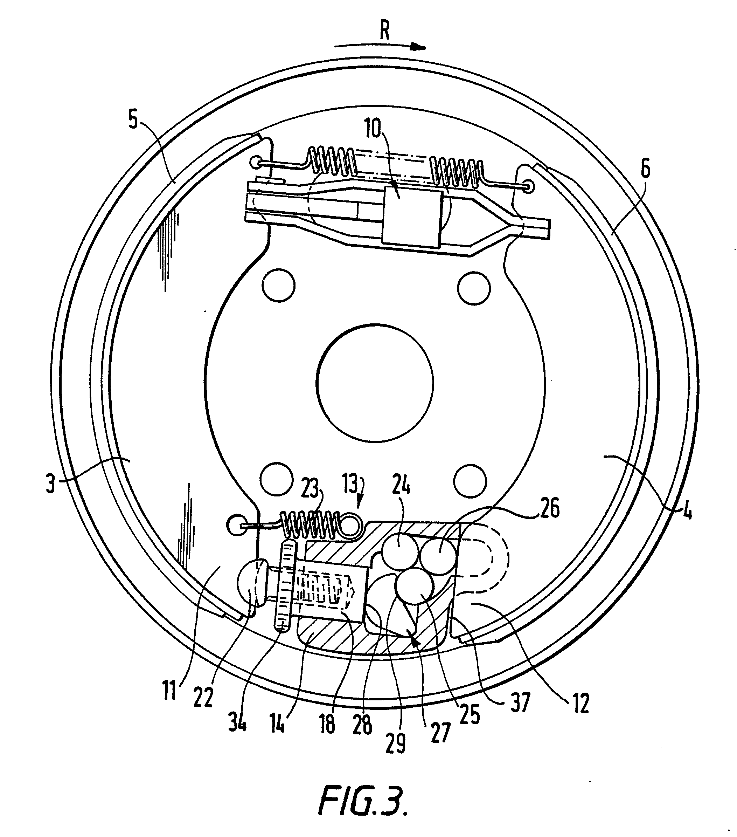

In Figure 3, the associated brake drum rotates in a clockwise direction (as seen), as illustrated by the arrow R, and corresponding to a reverse direction of rotation.

Assume, for example, that the towing vehicle is trying to reverse the trailer to which the drum brake is fitted. Upon commencing reverse motion, the drawbar mechanism automatically causes the overrun brakes to be actuated, such that the expander I0 expands, to urge the brake linings 5, 6 towards engagement with the brake drum, as in normal braking operation. However, in this case, the frictional engagement of the brake drum with the brake linings 5, 6 causes a resultant force to be applied to the cam 27 in a direction from right to left, as seen in Figure 3. Thus, the cam 27 is caused to pivot anti-clockwise (as seen), allowing the intermediate roller 25 and the end roller 26 to move into new, second positions. With reference to Figure 3, it will be seen that the new, second position for the end roller 26 corresponds to the initial, first position for the intermediate roller 25, whilst the intermediate roller 25 drops down below the two other rollers 24, 26.

This movement of the end roller 26 allows the second end I2 of the brake shoe 4 to move closer towards the second end II of the brake shoe 3 such that, despite the expander I0 being actuated by the overrun brake linkage, the brake shoes 3, 4 still collapse towards one another, to a sufficient extent to bring the brake linings 5, 6 out of effective engagement with the brake drum.

As with most reversing drum brakes, the trailer is preferably provided with a handbrake arrangement which incorporates an energy store such that, when the handbrake is applied, sufficient further movement of the expander I0 may be caused, to achieve full braking even with the brake shoes 3, 4 in the collapsed position illustrated in Figure 3.

However, details of such handbrake mechanisms with energy stores are not essential to an understanding of the present invention, and so further description is not given here.

The collapsing motion of the collapsing mechanism 13 will now be described in somewhat more detail.

Firstly, assume that the collapsing mechanism 13 is in the state shown in Figure 1, but that the associated brake drum is just beginning to rotate in the reverse direction. The initial, first positions of the rollers 25 and 26 are such that the centre of the roller 25 is just below the line which joins the centres of the end rollers 24, 26.

A reaction force is transmitted via the bolt 21 and adjuster nut 34 to the housing 14, and via the bolt 21 and cylinder 18 to the first cam surface 28 of the cam 27, as before. Also, the reaction force is transmitted from the second end 12 of the brake shoe 4 to the rollers 26 and 25, and thence via the roller 24 to the housing 14, and to the second cam surface 29 of the cam 27.

However, as mentioned above, the resultant force on the cam 27 is now acting from right to left (as seen), because of the change in direction of the frictional forces applied to the brake linings, via the rotating brake drum. Thus, because of its slightly off-centre first position, the intermediate roller 25 is squeezed downwardly, by the force applied between the end rollers 24, 26, and acts on the second cam surface 29 to cause the cam 27 to pivot anti-clockwise. In turn, the first cam surface 28 bears against the corresponding end face of the cylinder 18, to urge this, together with the adjuster nut 34 and bolt 22, and thereby the second end 11 of the brake shoe 3, towards the left.

As soon as the reverse rotation of the brake drum ceases, the resilient force afforded by the tension spring 23 acts via the bolt 22 and cylinder 18 on the first cam surface 28, to urge the cam 27 back towards the right, in a clockwise direction. The force is then transmitted to the intermediate roller 25, via the second cam surface 29, to urge the roller 25 back inbetween the end rollers 24 and 26, and thereby urge the second end 12 of the brake shoe 4 to the right (as seen), until the collapsing mechanism 13 resumes the position as illustrated in Figure 1.

It will be appreciated that the distance of the first cam surface 28 from the pivot point 30 of the cam 27 is less than the distance of the second cam surface 29 from the pivot point 30. Thus, a relatively small travel of the cylinder 18 results in a larger displacement in the intermediate roller 25. Conversely, when the brake is operating in the reversing mode, this lever effect of the cam 27 gives a mechanical advantage to the movement of the rollers 25, 26, which move a correspondingly large distance, as compared to the smaller distance moved by the bolt 21 and cylinder 18. By way of example, the rollers 24, 25, 26 may each have a diameter of 12mm, and the maximum travel 1 of the adjuster nut 34 may be 3mm. This gives an overall travel of 9mm, for the second end 12 of the brake shoe 4, in reversing mode.

It may be appreciated that, as the intermediate roller 25 moves from its second position as shown in Figure 3, back into its first position as shown in Figure 1, it progressively moves up the second cam surface 29, so that the effective moment of the forces occurring at the second cam surface 29 increase.

It will be observed that the first cam surface 28 is slightly curved, to assist starting of the pivoting movement of the cam 27, from its second end position as shown in Figure 3, towards its first end position as shown in Figure 1. When the cam 27 is in the position illustrated in Figure 1, it has a face 36 which abuts an opposed abutment surface of the housing 14. It will be appreciated that the cam 27 does not have to apply appreciable force to the intermediate roller 25, to maintain it in the position illustrated in Figure 1, during normal forward braking and rest operation.

It may be appreciated that, when the collapsing mechanism 13 is in the condition illustrated in Figure 3, the lower end 12 of the brake shoe 14 bears against an end face 37 of the housing 14. Thus, when the brake shoes 5 and 6 are applied against the brake drum in the reversing mode, utilising extra travel of the expander 10 by means of an appropriate handbrake mechanism as discussed above, the second end of the brake shoe 4 reacts against the face 37 of the housing 14, as well as on the end roller 26.

It may also be appreciated that the roller 24 does not undergo any rolling travel, but rather acts as a convenient friction reducing surface, to guide the travel of the intermediate roller 25. Indeed, the roller 24 may be dispensed with, and replaced by a correspondingly shaped part of the housing 14. However, it is preferred to provide the roller 24, for friction reducing purposes.

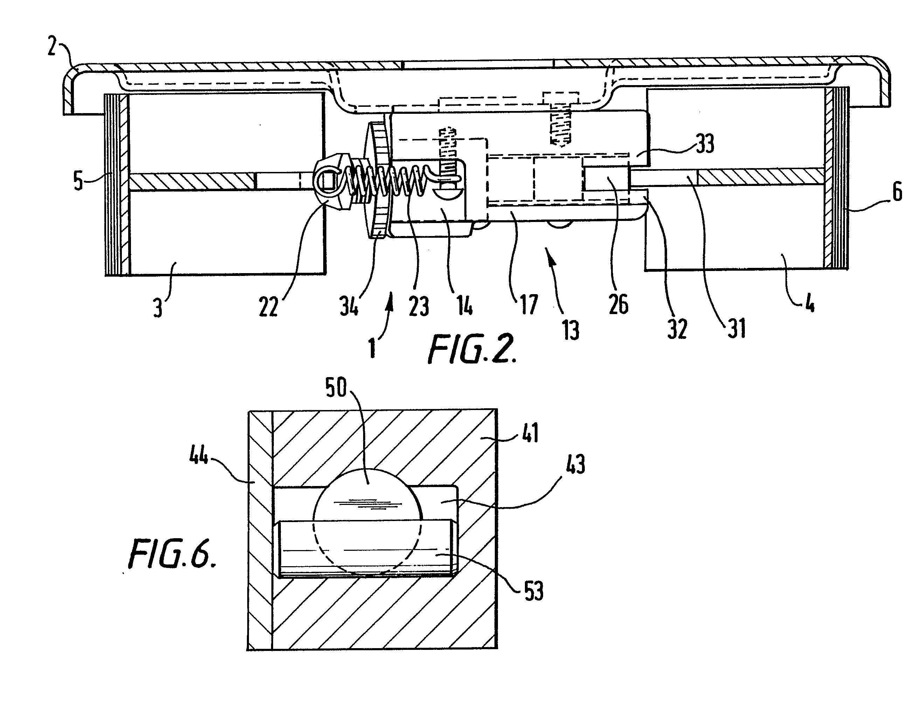

The collapsing mechanism of Figures 1 to 3 may therefore be used in a reversing brake to afford effective braking in the normal forward direction, whilst collapsing readily, and with little frictional resistance, in the reversing mode. It may be manufactured relatively simply and economically, and being of simple construction, operate in a reliable and largely maintenance-free manner. The arrangement of the collapsing mechanism may be such that the rollers 24, 25, 26 and the cam 27 are retained within an oil-filled enclosure, further to reduce friction.

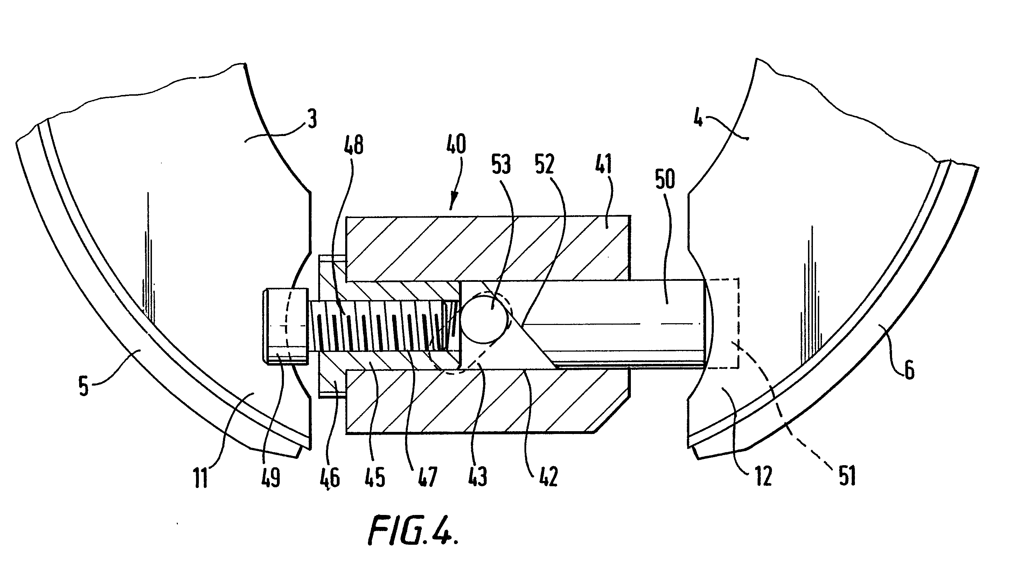

The collapsing mechanism 40 that is shown in Figures 4 to 6 employs an alternative construction to that illustrated in Figures I to 3. It may be disposed in the reversing drum brake I in generally the same disposition as the collapsing mechanism I3. Therefore, in Figures 4 to 6, a general description of the reversing drum brake I is not repeated, and only the parts of the drum brake adjacent the collapsing mechanism 40 are shown.

The collapsing mechanism 40 comprises a housing 4I which is formed with a longitudinal circular bore 42, and a transverse guideway slot 43, which is closed by a plate 44. The housing 40 may be secured to the back plate 2 of the reversing drum brake I, in a similar manner to the housing I4 of the collapsing mechanism I3.

A first member 45 is slidably mounted in the longitudinal bore 42, and has an annular head 46 which bears against a respective end of the housing 4I, and an internal screw-threaded bore 47 in which there is screw-threadedly engaged a bolt 48. The bolt 48 has a slotted head 49, which engages with the lower end II of the respective brake shoe 3.

At the opposite end of the longitudinal bore 42 there is slidably mounted a second member 50, one end 5I of which is slotted to engage the lower end I2 of the respective brake shoe 4. The opposite end 52 of the second member 50 is so angled that it extends transversely of the bore 42.

A cylindrical roller 53 is mounted for rolling and sliding movement within the guideway 43, and abuts the inner ends of the first and second members 45 and 50.

The collapsing mechanism 40 operates as follows.

Firstly, in the condition illustrated in Figure 4, the respective wheel rotates in the forward direction and, upon braking, forces applied to the brake shoes 3 and 4 are reacted at the respective slotted ends of the first and second members 45 and 50. As will readily be understood from the description of the preceding embodiment, the resultant force applied to the collapsing mechanism 40 during normal braking is from left to right (as seen in Figure 4). Thus, the first member 45 is urged fully to the right until the annular collar 46 abuts against the housing 40 and, in this position, the inner end of the member 45 maintains the roller 53 in a first position at the upper end of the guideway 43, as illustrated in Figure 4. In turn, the roller 43 is urged against the second member 50, to maintain it in its illustrated position. Braking is then effected in a substantially normal manner.

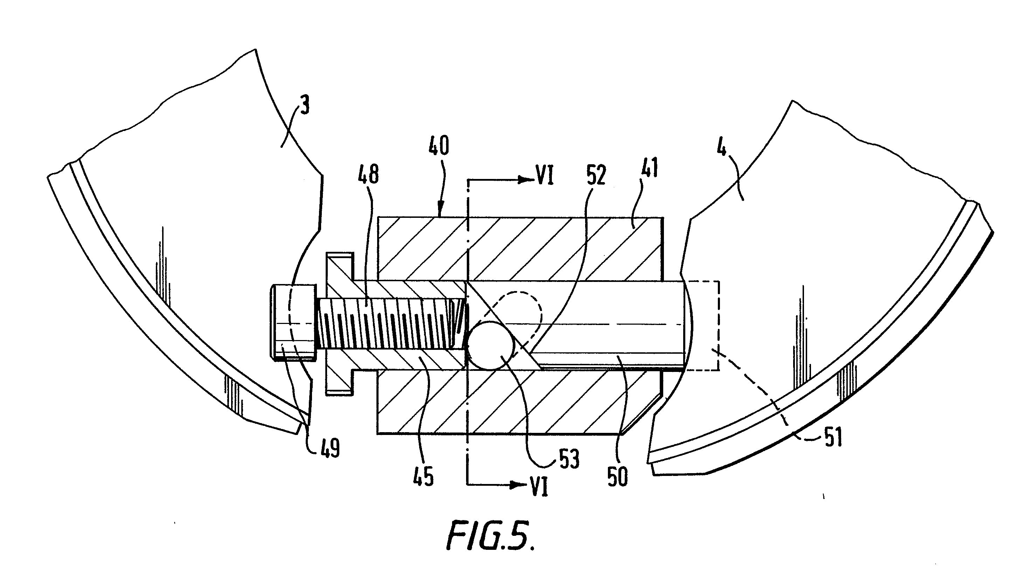

Upon braking during reversing, however, the resultant force transmitted to the collapsing mechanism 40 is from right to left, as seen in Figure 5. This causes the second member 50 to slide within the bore 42, from right to left, thereby causing the roller 53 to move down to a second position at the lower end of the guideway 43. In turn, the roller 53 urges the first member 45 to the left, until the collapsing mechanism 40 assumes a collapsed position, as illustrated in Figure 5. It will be appreciated that, during this collapsing movement, the linear sliding movement of the second memer 50 from right to left is greater than the linear movement of the roller 53 in the horizontal direction, during its rolling movement. This permits the first and second members 45 and 50 to collapse towards one another, until they achieve their relative positions as illustrated in Figure 5.

Thus, it will be appreciated that, in principle, the collapsing mechanism 40 operates in a similar manner to the collapsing mechanism I3 of Figures I to 3. However, the collapsing mechanism 40 is of somewhat simpler construction, and is therefore simpler and cheaper to manufacture and assemble.

The collapsing mechanism 40 may be adjusted in a similar manner to the mechanism I3, by applying a suitable tool to the annular collar 46, thereby to rotate the first member 45 and adjust the relative longitudinal dispositions of the first member 45 and its bolt 48. As in Figures I to 3, a tension spring such as 23 may be provided between the housing 40 and the brake shoe 3.

A particularly useful feature of the collapsing mechanism 40 is that the unit may be readily sealed against the ingress of dirt by fitting lip or O-ring seals around the first and second slideable members 45 and 50, within or at each respective mouth of the longitudinal bore 42.

The invention is not restricted to the details of the foregoing embodiment(s). The invention extends to any novel one, or any novel combination, of the features disclosed in this specification and/or drawings, or to any novel one, or any novel combination, of the steps of any method or process disclosed herein.

## Claims

I. A collapsing mechanism for a reversing drum brake of the type specified, the mechanism comprising first and second members which are adapted to be disposed between opposing ends of a pair of brake shoes, said members being so connected that, when a resultant force is applied to the members in one direction, oppositely facing portions of the members are disposed at a first distance apart, such that they may hold respective ends of a pair of brake shoes at a corresponding distance apart, and when a resultant force is applied to the members in an opposite direction, the members collapse towards one another such that said oppositely facing portions are disposed at a second distance apart, less than said first distance, such that they may hold said respective ends of said pair of brake shoes at a correspondingly lesser distance apart.

2. A collapsing mechanism according to Claim l, wherein the connection between said members includes friction reducing means for reducing friction between said members when undergoing relative movement.

3. A collapsing mechanism according to Claim 2, wherein said friction reducing means comprises roller means for providing rolling contact between moving surfaces.

4. A collapsing mechanism according to Claim 3, comprising a housing in which said members are mounted and a guideway provided in the housing, the roller means being mounted for rolling movement in the guideway between first and second positions, such that, in use, the roller means occupies either said first or second position in the guideway, in dependence upon the direction of the resultant force transmitted between said members, and the roller means permits said members to move closer towards one another when the roller means is in said first position than when the roller means is in said second position.

5. A collapsing mechanism according to Claim 4, wherein said first member is slideably mounted in said housing and mechanically linked to at least one roller of said roller means such that a first sliding movement of said first member in the housing causes a second rolling movement of said one roller in said guideway.

6. A collapsing mechanism according to Claim 5, wherein the linear travel of said one roller in said second rolling movement is greater than the sliding travel of said first member in said first sliding movement.

7. A collapsing mechanism according to Claim 5 or 6, wherein said second member is slideably mounted in said housing and mechanically linked to said one roller such that said second rolling movement of the roller causes a further sliding movement of the second member.

8. A collapsing mechanism according to Claim 7, wherein the further sliding movement of said second member is greater than the linear travel of said one roller in said second rolling movement.

9. A collapsing mechanism according to Claim 8, wherein said first and second members are slideably mounted in respective passageways at opposite ends of the housing, and have inner ends which face one another and in use are urged towards one another with said one roller therebetween.

l0. A collapsing mechanism according to Claim 9, wherein said one roller is constrained to move in said guideway in a direction which extends tranversely of the axes of said passageways.

**FIG.1.**

FIG.2.

FIG.6.

FIG.3.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 053 391 (AUTOMOTIVE)<br>* Page 1, lines 63-125; figures 1-4 * | 1-4 | B 60 T 7/20 |
| X | EP-A-0 017 762 (FR. KOTZ & SÖHNE)<br>* Page 6, line 15 - page 7, line 33; figures 1-7 * | 1 | |
| X | GB-A-1 493 832 (CHOUINGS)<br>* Page 1, line 66 - page 2, line 35; figure 1/1 * | 1 | |

|  |
|---|
| TECHNICAL FIELDS SEARCHED (Int. Cl.4) |
| B 60 T 7/00<br>B 60 T 11/00 |

The present search report has been drawn up for all claims

| Place of search | Date of completion of the search | Examiner |
|---|---|---|
| THE HAGUE | 29-06-1987 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82